# EUROPÄISCHE PATENTSCHRIFT

(11) **EP 2 657 797 B1**
(45) Veröffentlichungstag und Bekanntmachung des Hinweises auf die Patenterteilung: **18.01.2017**
(21) Anmeldenummer: 12166006.2
(22) Anmeldetag: 27.04.2012
(51) Int. Cl.: G05B 9/03, G05B 19/042, G06F 11/20, G06F 11/16

(54) **Verfahren zum Betreiben eines redundanten Automatisierungssystems**
Method for operating a redundant automation system
Procédé de fonctionnement d'un système d'automatisation redondant

(43) Veröffentlichungstag der Anmeldung: 30.10.2013
(73) Patentinhaber: Siemens Aktiengesellschaft, 80333 München (DE)
(72) Erfinder: Grosch, Thomas, 90574 Roßtal (DE); Laforsch, Jürgen, 76187 Karlsruhe (DE); Renschler, Albert, 76275 Ettlingen (DE)

(56) Entgegenhaltungen:
- EP-A2- 1 136 896
- EP-A2- 1 388 397
- DE-A1- 3 633 953
- DE-A1- 19 625 195
- US-A1- 2002 095 221

## Beschreibung

Die Erfindung betrifft ein Verfahren zum Betreiben eines redundanten, mit einem ersten und einem zweiten Teilsystem versehenen Automatisierungssystems, welche während der Steuerung eines technischen Prozesses jeweils ein Steuerprogramm redundant verarbeiten, wobei eines dieser Teilsysteme als Master und das andere Teilsystem als Slave arbeitet und wobei für den Fall, dass der Master ausfällt, der Slave die Funktion des Masters übernimmt. Darüber hinaus betrifft die Erfindung ein redundantes Automatisierungssystem, welches zur Durchführung des Verfahrens geeignet ist.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformation für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Häufig wird von einem H-System ein stoßfreies "Failover" gefordert, falls eines der Teilsysteme ausfällt und auf das andere Teilsystem umgeschaltet werden muss. Dies bedeutet, dass trotz dieser ungeplanten Umschaltung bzw. diesem ungeplanten Wechsel von einem auf das andere Teilsystem diese Umschaltung bzw. dieser Wechsel sich nicht störend auf den zu steuernden technischen Prozess auswirkt. Dabei ist zulässig, dass an den Ausgängen der angeschlossenen Peripherie eine (kurze) Totzeit auftreten darf, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und sollte daher vermieden werden. Unter stoßfrei ist daher auch die Stetigkeit des Kurvenverlaufs der Prozessausgangswerte zu verstehen.
Um dies zu erreichen, müssen die beiden Teilsysteme zum Zeitpunkt des Ausfalls den gleichen Systemzustand aufweisen. Dies wird durch das geeignete Synchronisationsverfahren sichergestellt. Verarbeiten beide Teilsysteme die Eingangsinformationen (Eingaben) des Prozesses, so befinden sich beide Systeme dann im gleichen Systemzustand, wenn sie - bei gleichen Prozesseingangsdaten bzw. Prozesseingangsinformationen - ihre jeweiligen "thread-globalen" Daten (gemeinsame Daten von Programmen, insbesondere von Programmen unterschiedlicher Prioritäten) in gleicher Weise verändern. Um dies zu erreichen, stellt das Synchronisationsverfahren sicher, dass die einzelnen Threads der beiden Teilsysteme in gleicher Art und Weise unterbrochen bzw. abgearbeitet werden. Damit ergibt sich ein identisches "Threadgebirge".

Aus dem Siemens-Katalog ST 70, Kapitel 6, Ausgabe 2011 ist ein redundantes, aus zwei Teilsystemen bestehendes Automatisierungssystem bekannt, welches dazu vorgesehen ist, die Verfügbarkeit einer zu steuernden Anlage zu erhöhen. Dazu ist das Automatisierungssystem mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms des zu steuernden technischen Prozesses an einem Meldeeingang des Automatisierungssystems anliegt, wird gewöhnlich das laufende Programm an einem Wartepunkt angehalten und ein Programm gestartet, das zur Analyse des Alarms und zum Einleiten von Maßnahmen vorgesehen ist, welche die Ursache des Alarms beheben. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.
Für den Fall, dass z. B. ein auf einem ersten Teilsystem aufgetretenes Ereignis nicht mit einem zweiten Teilsystem eines zwei Teilsysteme umfassenden Automatisierungssystems synchronisiert wird und nach der Bearbeitung des Ereignisses durch das erste Teilsystem dieses Teilsystem ausfällt, kann der Verlauf eines zu steuernden technischen Prozesses gestört werden; denn das zweite Teilsystem durchläuft - ohne Kenntnis des Ereignisses - einen anderen, die Ausführungs-Reihenfolge der Programme repräsentierenden Programmpfad als den, welchen das zweite Teilsystem in Kenntnis des Ereignisses durchlaufen würde und der auch erforderlich wäre, um den genannten Verlauf des zu steuernden technischen Prozesses nicht zu stören.

In diesem Zusammenhang wird darauf hingewiesen, dass unter einem Programm sowohl ein Programm als solches, als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungssystems gewöhnlich in Prioritätsklassen eingeteilt sind und gemäß ihrer zugeordneten Priorität bearbeitet bzw. ausgeführt werden.

Aus der EP 0 907 912 B1 ist ein Synchronisationsverfahren für ein aus zwei Teilsystemen aufgebautes Automatisierungssystem bekannt. Dieses Synchronisationsverfahren basiert auf einer zeitlich synchronen Kopplung der beiden Teilsysteme, wobei an geeigneten Programmstellen, an denen ein Abgleich vorgesehen ist, beide Teilsysteme auf eine Antwort des jeweils anderen Teilnehmers warten und erst dann jeweils ihre Programmverarbeitung zeitlich synchron fortsetzen. Nachteilig sind die langen Wartezeiten bis zum Erhalt der Antworten, welche für die zeitliche Synchronisation erforderlich sind.

US 2002/0095221 A1 beschreibt ein redundantes Automatisierungssystem, welches mit einer ersten und einer zweiten Steuerung versehen ist. Es sind geeignete Maßnahmen vorgesehen, die eine zeitgerechte Ausführung von periodischen Tasks ermöglichen.

EP 1 136 896 A2 offenbart ein hochverfügbares Rechnersystem mit einem ersten und zweiten Rechner, wobei auf beiden Rechnern identische Steuerprogramme geladen sind und wobei das Steuerprogramm des zweiten Rechners an einer vorgegebenen Programmstelle wartet.

Aus der EP 1 388 397 A2 sind Handhabungsgeräte mit zu synchronisierenden, jeweils ein Steuerprogramm aufweisenden Steuerungen bekannt, wobei der Programmablauf in diesen Steuerungen an Synchronisationspunkten unterbrochen oder fortgesetzt wird.

Der Erfindung liegt daher die Aufgabe zugrunde, ein Verfahren der eingangs genannten Art anzugeben, mittels welchem im Hinblick auf die Synchronisation der Programmverarbeitung auf den beiden Teilsystemen auf eine zeitlich synchrone Kommunikation zwischen den Teilnehmern verzichtet werden kann. Darüber hinaus ist ein redundantes Automatisierungssystem zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Automatisierungssystems durch die im kennzeichnenden Teil des Anspruchs 5 angegebenen Maßnahmen gelöst.

Vorteilhaft ist, dass der Master nicht (aktiv) auf eine Antwort des Slaves warten muss, um seine Programmverarbeitung fortsetzen zu können; die Übertragung aller relevanten Informationen von dem Master zu dem Slave erfolgt zeitlich asynchron. Dadurch wird die Verarbeitungsleistung des Masters von der für eine Ereignissynchronisation zur Verfügung stehenden Kommunikationsbandbreite entkoppelt, was insbesondere im Hinblick auf das zunehmende Ungleichgewicht zwischen der Steigerung der Verarbeitungsleistung der Prozessoren einerseits und der Steigerung der Kommunikationsleistung andererseits von Bedeutung ist; denn die Kommunikationsleistung kann gewöhnlich nicht mit der zunehmenden Verarbeitungsleistung Schritt halten.

Die Synchronisation der beiden Teilsysteme nach dem Auftreten eines Ereignisses erfolgt synchron derart, dass sowohl der Master als auch der Slave aufgrund dieses Ereignisses gleiche Programmpfade durchlaufen, wobei die Durchläufe zeitlich asynchron erfolgen. Dies bedeutet, dass der Master im Hinblick auf die Programmver- bzw. -bearbeitung dem Slave zeitlich vorausläuft bzw. der Slave dem Master zeitlich nachläuft. Unter einem "Nachlauf" bzw. "Vorauslauf" wird in diesem Zusammenhang die zeitliche Differenz zwischen dem Beginn der Verarbeitung der Verarbeitungsabschnitte durch den Master und dem Beginn der Verarbeitung der Verarbeitungsabschnitte durch den Slave, was dem Zeitpunkt des Auftretens des Freigabesignals entspricht, verstanden.

Aufgrund der zeitlich asynchronen Kommunikation zwischen dem Master und dem Slave ist es möglich, auch langsame Kommunikationsverbindungen für den Aufbau eines hochverfügbaren Automatisierungssystems zu nutzen. Dies bedeutet, dass auch eine an sich im Hinblick auf die Übertragungsbandbreite oder Antwortzeit schlechte Kommunikationsverbindung oder auch eine Kommunikationsverbindung vorgesehen werden kann, die auch von anderen Kommunikationsteilnehmern genutzt wird und damit den beiden Teilnehmern nicht exklusiv für Synchronisationszwecke zur Verfügung steht. Auf eine separate Synchronisationsverbindung kann daher verzichtet werden. Ferner können auch große Distanzen zwischen den beiden Teilnehmern überwunden werden, ohne die Systemleistung durch hohe Signallaufzeiten oder hohe Latenzzeiten allzu sehr zu verschlechtern.

In einer Ausgestaltung der Erfindung ist vorgesehen, dass zum Zeitpunkt der Übermittlung der aktuellen Freigaben dem Slave mittels des Masters auch Prozesseingangswerte übermittelt werden. Die für den Slave relevanten Informationen werden zunächst zusammengefasst bzw. gesammelt und schließlich dem Slave übermittelt. Dies bedeutet im Unterschied zu bekannten zeitlichen Synchronisationsverfahren, im Rahmen derer relevante Informationen gleich zum Slave gesendet werden müssen, einen deutlich verringerten "Verwaltungsaufwand" sowohl für den Master als auch für den Slave bzw. die Reserve.

In einer weiteren Ausgestaltung der Erfindung ist vorgesehen, dass durch den Slave nach der Bearbeitung der jeweiligen Verarbeitungsabschnitte die jeweilige Freigabe dem Master quittiert wird. Die Anzahl der unquittierten Freigaben weist den Master auf den aktuellen Nachlauf des Slaves hin, wodurch der Master geeignete Maßnahmen ergreifen kann, um den zeitlichen Nachlauf nicht zu groß werden zu lassen.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 bis 3: Abläufe einer zeitlich asynchronen Kopplung von zwei Teilsystemen und
- Figur 4: ein redundantes Automatisierungssystem.

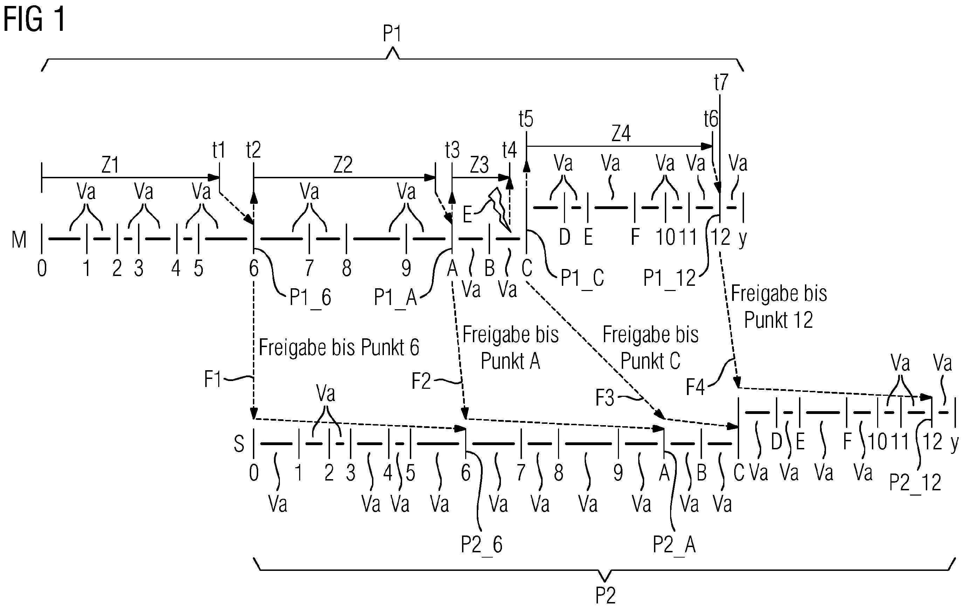

Die in den Figuren 1 bis 4 gleichen Teile sind mit gleichen Bezugszeichen versehen.

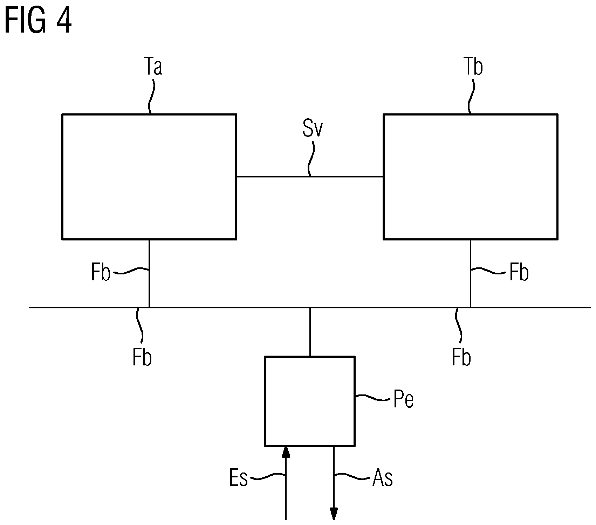

Es wird zunächst auf Figur 4 verwiesen, in welcher ein an sich bekanntes redundantes, zwei Teilsysteme umfassendes Automatisierungssystem dargestellt ist. Ein erstes Teilsystem Ta und ein zweites Teilsystem Tb sind über einen Feldbus Fb mit einer Peripherieeinheit Pe verbunden. Dabei genügt der Feldbus Fb beispielsweise der PROFIBUS-DP-Spezifikation. Prinzipiell sind auch andere Bussysteme, z. B. Ethernet, Fieldbus, Modbus oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme Ta, Tb arbeiten zyklisch und synchron dasselbe Steuerprogramm ab. Zu ihrer Synchronisation ist eine Synchronisationsverbindung Sv vorgesehen, wobei die Redundanz- und Überwachungsfunktionen über diese Synchronisationsverbindung Sv verwirklicht werden.

Zur Erläuterung einer ereignissynchronen Verarbeitung der Steuerprogramme wird im Folgenden auf die Figuren 1 bis 3 verwiesen, in welchen Abläufe einer zeitlich asynchronen Kopplung von zwei Teilsystemen dargestellt werden. Eine "ereignissynchrone Verarbeitung" bedeutet in diesem Zusammenhang, dass sowohl der Master als auch der Slave aufgrund eines Ereignisses gleiche Programmpfade des jeweiligen Steuerprogramms durchlaufen, wobei die Durchläufe zeitlich asynchron erfolgen.

Es wird angenommen, dass ein Teilsystem als Master M und ein Teilsystem als Slave S bzw. als Reserve betrieben wird. Der Master M ist daher im Hinblick auf die Steuerung eines technischen Prozesses führend und übernimmt die Prozesssteuerung, wobei der Master die Prozesseingangsinformationen bzw. Prozesseingangswerte von der Peripherieeinheit Pe (Figur 4) liest und zeitlich asynchron dem Slave S bereitstellt. Der Slave S übernimmt nur dann die Masterfunktion bzw. die Masterschaft, falls der Master M aufgrund einer Störung ausfällt.

Der Master M verarbeitet ein Programm P1 zur Steuerung des technischen Prozesses, wobei auch der Slave S ein zu diesem Steuerprogramm P1 entsprechendes Programm P2 verarbeitet. Beide Steuerprogramme P1, P2 weisen eine Vielzahl von Verarbeitungsabschnitten (Va) unterschiedlicher Zeitdauer auf, wobei die Steuerprogramme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Stellen 0, 1, 2, ... y kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit der Master M und der Slave S Freigaben, Quittungen oder sonstige Informationen über den Feldbus Fb oder über die Synchronisationsverbindung Sv (Figur 4) austauschen können. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervalls Zi folgenden Unterbrechungsstelle -, übermittelt der Master M dem Slave S eine Freigabe bzw. ein Freigabesignal, welches dem Slave S anzeigt, bis zu welchem Verarbeitungsabschnitt Va der Slave S das Steuerprogramm P2 verarbeiten darf. Diese Verarbeitungsabschnitte Va des Steuerprogramms P2 entsprechen denen, die der Master M bereits während der Verarbeitung des Steuerprogramms P1 verarbeitet hat. Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, der Master M dem Slave S eine Freigabe F1 übermittelt. Diese Freigabe F1 umfasst die Information für den Slave S, dass dieser sein zu verarbeitendes Steuerprogramm P2 bis zu einer Unterbrechungsstelle P2_6 (Unterbrechungsstelle 6) verarbeiten darf, wobei die Unterbrechungsstelle P2 des Steuerprogramms P2 der Unterbrechungsstelle Pl_6 des Steuerprogramms P1 entspricht. Dies bedeutet, dass aufgrund der Freigabe der Slave S die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zum Slave S entspricht. Die Verarbeitung dieser Verarbeitungsschritte Va mittels des Slaves S erfolgt also zeitlich asynchron zur Verarbeitung der entsprechenden Verarbeitungsabschnitte Va mittels des Masters M, wobei nach der Verarbeitung der Verarbeitungsabschnitte Va des Steuerprogramms P2 durch den Slave S eine Bearbeitung von weiteren Verarbeitungsabschnitten Va durch den Slave S nur dann erfolgt, wenn der Master M dem Slave S eine weitere Freigabe übermittelt. Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt der Master M dem Slave S eine weitere Freigabe F2, die dem Slave S anzeigt, dass dieser weitere Verarbeitungsabschnitte Va bis zu der Unterbrechungsstelle P2_A bearbeiten kann. Diese Verarbeitungsabschnitte Va entsprechen wiederum denen, welche der Master M bereits vom Zeitpunkt t2 bis zum Zeitpunkt t3, also bis zur Unterbrechungsstelle P1_A, verarbeitet hat. Dies bedeutet, dass der Slave S die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z. B. ein Ereignis in Form eines Prozessalarms, auftritt. Im Ausführungsbeispiel ist mit E ein derartiges Ereignis bezeichnet, auf welches der Master M während des Zeitintervalls Z3 zu einem Zeitpunkt t4 geeignet nach Maßgabe des Steuerprogramms P1 reagieren muss. In diesem Fall übermittelt der Master M dem Slave S eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Slave S übermittelten Freigabe F3 verarbeitet der Slave S die Verarbeitungsabschnitte Va des Steuerprogramms P2, welche den Verarbeitungsabschnitten Va des Steuerprogramms P1 entsprechen, welche der Master M zwischen den Zeitpunkten t3 und t5 bereits verarbeitet hat.

Aufgrund des Ereignisses E verarbeitet der Master M während des Zeitintervalls Z4 Verarbeitungsabschnitte Va höherer Priorität, z. B. vollzieht der Master M einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet der Slave S ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei der Slave S ebenfalls einen Threadwechsel vollzieht.

Wie erläutert, versetzen die Freigaben des Masters M den Slave S in die Lage, das gleiche "Threadgebirge" wie der Master M zu durchlaufen, was bedeutet, dass der Slave S einen "Threadwechsel" an einer Stelle im Steuerprogramm P2 vornimmt, die der Stelle im Steuerprogramm P1 entspricht. Der Slave S setzt seine Bearbeitung nur dann fort, wenn dieser dazu vom Master M durch eine Freigabe aufgefordert wird. Im Hinblick auf die Verarbeitung der Verarbeitungsabschnitte verarbeitet der Master M diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch den Slave S, wobei der Master M weiter sein Steuerprogramm P1 verarbeitet und nicht aktiv auf eine Antwort des Slaves S wartet. Der Slave S läuft bezüglich der Verarbeitung der entsprechenden Verarbeitungsabschnitte dem Master M nach und verarbeitet diese aufgrund der erteilten Master-Freigaben.

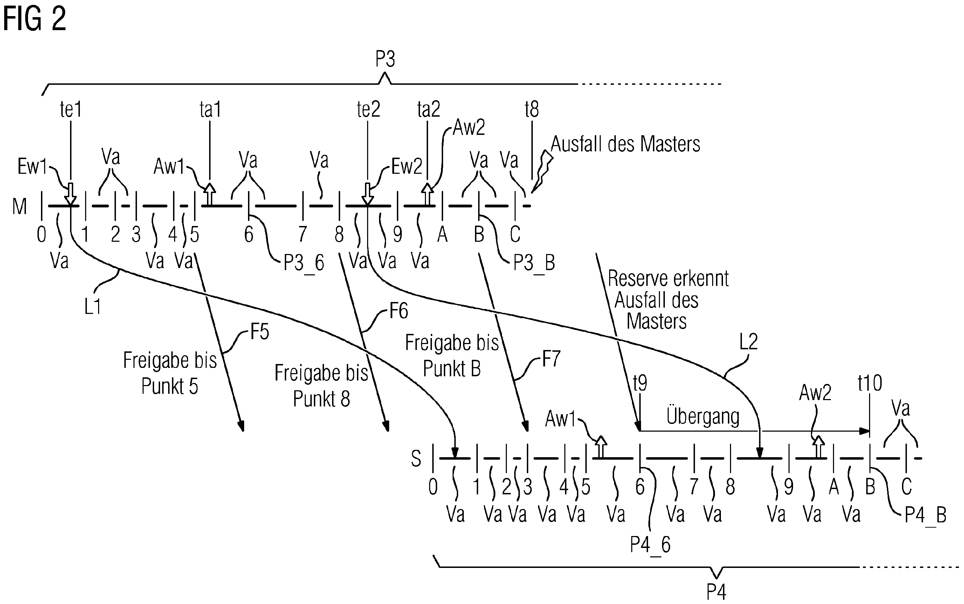

Im Folgenden wird auf Figur 2 verwiesen, in welcher ein Übergang der Masterschaft vom Master M zum Slave S dargestellt ist.
In der beschriebenen Art und Weise übermittelt der Master M dem Slave S Freigaben F5, F6, F7, wobei angenommen wird, dass zu einem Zeitpunkt t8 der Master M ausfällt.
Aufgrund der Freigaben F5 bis F7 verarbeitet der Slave S die Verarbeitungsabschnitte Va eines Steuerprogramms P4 bis zu einer Unterbrechungsstelle P4_B (Unterbrechungsstelle B), wobei diese Verarbeitungsabschnitte Va den Verarbeitungsabschnitten Va eines Steuerprogramms P3 bis zur Unterbrechungsstelle P3_B (Unterbrechungsstelle B) entsprechen, welche mittels des Masters M verarbeitet wurden.
Zu Zeitpunkten te1, te2 greift der Master M im Rahmen der Verarbeitung des Steuerprogramms P3 lesend auf die Peripherieeinheit Pe zu, was bedeutet, dass der Master M Prozesseingangswerte Ew1, Ew2 einliest, diese nach Maßgabe des Steuerprogramms P3 verarbeitet und Prozessausgangswerte Aw1, Aw2 erzeugt, die der Master M zu Zeitpunkten ta1, ta2 der Peripherieeinheit Pe übermittelt. Die Prozesseingangswerte Ew1, Ew2 übermittelt der Master M dem Slave S, was in der Zeichnung durch geschwungene Linien L1, L2 angedeutet ist. Die Übermittlung erfolgt zusammen mit den Freigaben F5, F7, um die Kommunikationslast zwischen dem Master M und dem Slave S während der Verarbeitung der Verarbeitungsabschnitte Va bis zu diesen Freigaben F5, F7 nicht zu erhöhen. Der Slave S verarbeitet ebenfalls diese Prozesseingangswerte Ew1, Ew2 entsprechend dem Steuerprogramm P4 und erzeugt ebenfalls die Prozessausgangswerte Aw1, Aw2, die der Slave S der Peripherieeinheit Pe übermittelt. Dabei wird davon ausgegangen, dass die Peripherieeinheit Pe eine "geschaltete" Peripherieeinheit mit einem Primär- und einem Sekundäranschluss ist. Der Primäranschluss ist zum Empfang der Prozessausgangswerte des Masters M und der Sekundäranschluss zum Empfang der Prozessausgangswerte des Slaves S vorgesehen, wobei der Slave S die Peripherieeinheit von dem Primär- auf den Sekundäranschluss umschaltet, falls der Slave S erkennt, dass der Master M ausgefallen ist.

Wie erläutert wird angenommen, dass zu einem Zeitpunkt t8 der Master M ausfällt. Der Slave S erkennt den Ausfall z. B. dadurch, dass der Master M dem Slave S kein Lebenszeichen über die Synchronisationsverbindung Sv oder den Feldbus Fb (Figur 4) während einer vorgegebenen Zeitdauer übermittelt hat. Nachdem der Slave S den Ausfall beispielsweise zu einem Zeitpunkt t9 erkannt hat, übernimmt der Slave S nicht sofort die Masterschaft; denn zu diesem Zeitpunkt t9 unterscheidet sich der Systemzustand des Slaves S von dem des Masters M und ein stoßfreier Wechsel bzw. Übergang ist daher nicht möglich. Zu diesem Zeitpunkt t9 hat der Slave S erst die Verarbeitungsabschnitte Va bis zu einer Unterbrechungsstelle P4_6 (Unterbrechungsstelle 6) verarbeitet, die entsprechenden Verarbeitungsabschnitte Va des Masters M bis zu einer Unterbrechungsstelle P3_6 (Unterbrechungsstelle 6) "liegen" somit in der Vergangenheit. Erst nach einem Übergang, d. h. nachdem der Slave S die mittels der Freigabe F7 freigegebenen Verarbeitungsabschnitte Va bis zur Unterbrechungsstelle P4_B zu einem Zeitpunkt t10 verarbeitet hat, übernimmt der Slave S die Masterschaft und somit die Steuerung des technischen Prozesses, wobei zu diesem Zeitpunkt t10 der Slave S die Peripherieeinheit von dem Primär- auf den Sekundäranschluss umschaltet. Während dieses Übergangs durchläuft also der (bisherige) Slave S noch das gleiche Threadgebirge pfadsynchron und verarbeitet die gleichen Prozesseingangswerte wie der (bisherige) Master M vor dessen Ausfall verarbeitet hat, wobei der (bisherige) Slave S aufgrund dieser Eingangswerte die gleichen Prozessausgangswerte wie der (bisherige) Master M ermittelt. Der Übergang ist dann beendet, wenn das Ziel der letzten Freigabe - im vorliegenden Beispiel die Verarbeitung der Verarbeitungsabschnitte Va bis zur Unterbrechungsstelle P4 B - erreicht ist.

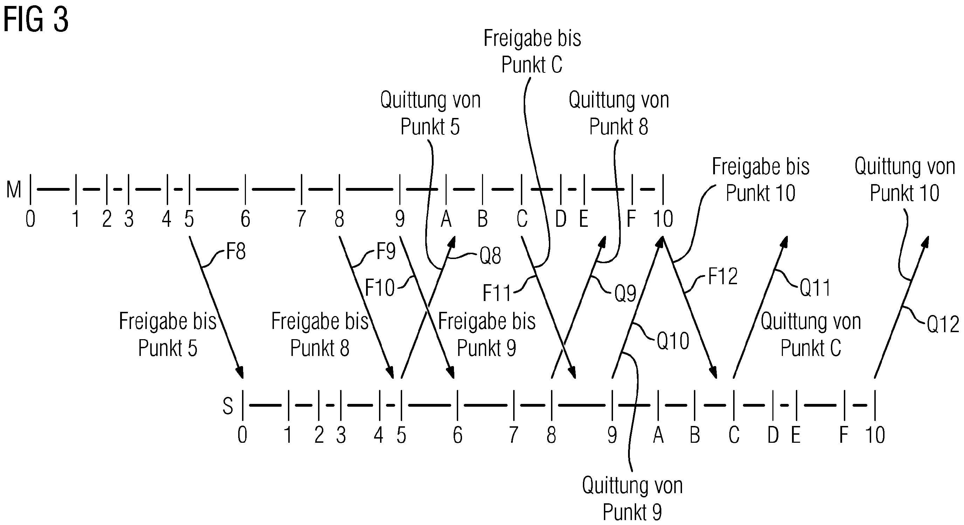

Die Dauer des Übergangs entspricht im Wesentlichen der Dauer des zeitlichen Nachlaufs zum Zeitpunkt des "Failovers". Um den zeitlichen Nachlauf in einem tolerierbaren Maß zu halten, wird jede Freigabe F8 bis F12 (Figur 3) des Masters M dann durch den Slave S asynchron mittels jeweiliger Quittungen Q8 bis Q12 quittiert, falls der Slave S die jeweilige Bearbeitung abgeschlossen hat. Der Master M wertet die Anzahl der unquittierten Freigaben aus und ermittelt aus diesen den aktuellen Nachlauf des Slaves S. Für den Fall, dass der zeitliche Nachlauf zu hoch bzw. zu lang ist, was z. B. zu einem Redundanzverlust führen kann, ergreift der Master M geeignete Maßnahmen, um den zeitlichen Nachlauf zu vermindern bzw. nicht zu groß werden zu lassen.

Beispielsweise kann der Master M als Reaktion auf einen zu großen Nachlauf die Verarbeitung niederpriorer Threads aussetzen oder verzögern, wobei die Verarbeitung der höherprioren Threads deutlich weniger als 100 % der Rechenzeit erfordert. Somit hat der Master M weniger Verarbeitungsabschnitte zu durchlaufen und erzeugt weniger Freigaben, so dass der Slave S bzw. die Reserve "aufholen" kann.

## Patentansprüche

1. Verfahren zum Betreiben eines redundanten, mit einem ersten und einem zweiten Teilsystem versehenen Automatisierungssystems, welche während der Steuerung eines technischen Prozesses jeweils ein Steuerprogramm (P1, P2) verarbeiten, wobei eines dieser Teilsysteme als Master (M) und das andere Teilsystem als Slave (S) arbeitet und wobei für den Fall, dass der Master (M) ausfällt, der Slave (S) die Funktion des Masters übernimmt, **dadurch gekennzeichnet, dass**
- Verarbeitungsabschnitte (Va) des mittels des Masters (M) zu verarbeitenden Steuerprogramms (P1) verarbeitet werden,
- nach dem Auftreten eines Ereignisses (E) zu einem Zeitpunkt (t5) des Auftretens einer auf das Auftreten dieses Ereignisses (E) folgenden Unterbrechungsstelle (P1 C) dem Slave (S) eine Freigabe (F3) durch den Master (M) übermittelt wird und der Master (M) sein zu verarbeitendes Steuerprogramm (P1) weiter verarbeitet, und
- die Freigabe (F3) dem Slave (S) anzeigt, bis zu welchem Verarbeitungsabschnitt (Va) der Slave (S) sein Steuerprogramm (P2) verarbeiten darf, wobei aufgrund der Freigabe (F3) die Verarbeitungsabschnitte (Va) des mittels des Slaves (S) zu verarbeitenden Steuerprogramms (P2) verarbeitet werden, welche den bereits verarbeiteten Verarbeitungsabschnitten (Va) des mittels des Masters (M) zu verarbeitenden Steuerprogramms (P1) von einer vorherigen Freigabe (F2) bis zu der Freigabe (F3) entsprechen.

2. Verfahren nach Anspruch 1, **dadurch gekennzeichnet, dass** durch den Slave (S) nach der Bearbeitung der jeweiligen Verarbeitungsabschnitte (Va) die jeweilige Freigabe (F1, F2, F3, F4) dem Master (M) quittiert wird.

3. Verfahren nach Anspruch 1 oder 2, **dadurch gekennzeichnet, dass** zum Beginn und zum Ende des jeweiligen Verarbeitungsabschnitts (Va) Unterbrechungsstellen (P1_6, P1_A, P1_C, P1_12) vorgesehen werden.

4. Verfahren nach einem der Ansprüche 1 bis 3, **dadurch gekennzeichnet, dass** zum Zeitpunkt (t2, t3, t6; t5) der Übermittlung der Freigaben (F1, F2, F4; F3) dem Slave (S) mittels des Masters (M) auch Prozesseingangswerte (Ew1, Ew2) übermittelt werden.

5. Redundantes mit einem ersten und einem zweiten Teilsystem versehenes Automatisierungssystem, welche während der Steuerung eines technischen Prozesses jeweils ein Steuerprogramm (P1, P2) verarbeiten, wobei eines dieser Teilsysteme als Master (M) und das andere Teilsystem als Slave (S) arbeitet und wobei für den Fall, dass der Master (M) ausfällt, der Slave (S) die Funktion des Masters (M) übernimmt, **dadurch gekennzeichnet, dass**
- der Master (M) dazu ausgebildet ist,
- Verarbeitungsabschnitte (Va) des mittels des Masters (M) zu verarbeitenden Steuerprogramms (P1) zu verarbeiten,
- nach dem Auftreten eines Ereignisses (E) zu einem Zeitpunkt (t5) des Auftretens einer auf das Auftreten dieses Ereignisses (E) folgenden Unterbrechungsstelle (P1 C) dem Slave (S) eine Freigabe (F3) zu übermitteln und sein Steuerprogramm (P1) weiter zu verarbeiten, wobei die Freigabe (F3) dem Slave (S) anzeigt, bis zu welchem Verarbeitungsabschnitt (Va) der Slave (S) sein Steuerprogramm (P2) verarbeiten darf, und
- weitere Verarbeitungsabschnitte (Va) des mittels des Masters (M) zu verarbeitenden Steuerprogramms (P1) zu verarbeiten, und
- der Slave (S) dazu ausgebildet ist,
- Verarbeitungsabschnitte (Va) des mittels des Slaves (S) zu verarbeitenden Steuerprogramms (P2) nur dann zu verarbeiten, falls durch den Master (M) dem Slave (S) die Freigabe (F3) übermittelt wird, und
- aufgrund der Freigabe (F3) Verarbeitungsabschnitte (Va) des mittels des Slaves (S) zu verarbeitenden Steuerprogramms (P2) zu verarbeiten, welche den bereits verarbeiteten Verarbeitungsabschnitten (Va) des durch den Master (M) zu verarbeitenden Steuerprogramms (P1) von einer vorherigen Freigabe (F2) bis zu der Freigabe (F3) entsprechen.

6. Redundantes Automatisierungssystem nach Anspruch 5, **dadurch gekennzeichnet, dass** der Slave (S) dazu ausgebildet ist, nach der Bearbeitung der jeweiligen Verarbeitungsabschnitte (Va) die jeweilige Freigabe (F1, F2, F3, F4) dem Master (M) zu quittieren.

7. Redundantes Automatisierungssystem nach Anspruch 5 oder 6, **dadurch gekennzeichnet, dass** das Automatisierungssystem dazu ausgebildet ist, in den mittels des Masters (M) und mittels des Slaves (S) zu verarbeitenden Steuerprogrammen (P1, P2) jeweils zum Beginn und zum Ende des jeweiligen Verarbeitungsabschnitts (Va) Unterbrechungsstellen (P1_6, P1_A, P1_C, P1_12, P2_6, P2_A, P2_12) vorzusehen.

8. Redundantes Automatisierungssystem nach einem der Ansprüche 5 bis 7, **dadurch gekennzeichnet, dass** der Master (M) dazu ausgebildet ist, zum Zeitpunkt (t2, t3, t6; t5) der Übermittlung der Freigaben (F1, F2, F4; F3) dem Slave (S) auch Prozesseingangswerte (Ew1, Ew2) zu übermitteln.

9. Slave, der für ein redundantes, einen Master (M) und den Slave (S) aufweisendes Automatisierungssystem nach einem der Ansprüche 5 bis 8 angepasst ist.

10. Master, der für ein redundantes, einen Slave (S) und den Master (M) aufweisendes Automatisierungssystem nach einem der Ansprüche 5 bis 8 angepasst ist.

## Claims

1. Method for operating a redundant automation system provided with a first subsystem and a second subsystem, which subsystems each process a control program (P1, P2) while controlling a technical process, one of these subsystems operating as a master (M) and the other subsystem operating as a slave (S), and the slave (S) assuming the function of the master if the master (M) fails, **characterized in that**
- processing sections (Va) of the control program (P1) to be processed using the master (M) are processed,
- the master (M) transmits a release (F3) to the slave (S) after an event (E) has occurred at a time (t5) at which a breakpoint (P1C) following the occurrence of this event (E) occurs, and the master (M) further processes its control program (P1) to be processed, and
- the release (F3) indicates to the slave (S) the processing section (Va) up to which the slave (S) can process its control program (P2), in which case, on the basis of the release (F3), those processing sections (Va) of the control program (P2) to be processed using the slave (S) which correspond to those processing sections (Va) of the control program (P1) to be processed using the master (M) which have already been processed from a preceding release (F2) up to the release (F3) are processed.

2. Method according to Claim 1, **characterized in that** the slave (S) acknowledges the respective release (F1, F2, F3, F4) to the master (M) after the respective processing sections (Va) have been processed.

3. Method according to Claim 1 or 2, **characterized in that** breakpoints (P1_6, P1_A, P1_C, P1_12) are provided at the beginning and at the end of the respective processing section (Va) .

4. Method according to one of Claims 1 to 3, **characterized in that** the master (M) is used to also transmit process input values (Ew1, Ew2) to the slave (S) at the time (t2, t3, t6; t5) at which the releases (F1, F2, F4; F3) are transmitted.

5. Redundant automation system provided with a first subsystem and a second subsystem, which subsystems each process a control program (P1, P2) while controlling a technical process, one of these subsystems operating as a master (M) and the other subsystem operating as a slave (S), and the slave (S) assuming the function of the master (M) if the master (M) fails, **characterized in that**
- the master (M) is designed
- to process processing sections (Va) of the control program (P1) to be processed using the master (M),
- to transmit a release (F3) to the slave (S) after an event (E) has occurred at a time (t5) at which a breakpoint (P1 C) following the occurrence of this event (E) occurs and to further process its control program (P1), the release (F3) indicating to the slave (S) the processing section (Va) up to which the slave (S) can process its control program (P2), and
- to process further processing sections (Va) of the control program (P1) to be processed using the master (M), and
- the slave (S) is designed
- to process processing sections (Va) of the control program (P2) to be processed using the slave (S) only if the release (F3) is transmitted to the slave (S) by the master (M), and
- on the basis of the release (F3), to process processing sections (Va) of the control program (P2) to be processed using the slave (S) which correspond to those processing sections (Va) of the control program (P1) to be processed by the master (M) which have already been processed from a preceding release (F2) up to the release (F3).

6. Redundant automation system according to Claim 5, **characterized in that** the slave (S) is designed to acknowledge the respective release (F1, F2, F3, F4) to the master (M) after the respective processing sections (Va) have been processed.

7. Redundant automation system according to Claim 5 or 6, **characterized in that** the automation system is designed to provide breakpoints (P1_6, P1_A, P1_C, P1_12, P2_6, P2_A, P2_12) in the control programs (P1, P2) to be processed using the master (M) and using the slave (S) in each case at the beginning and at the end of the respective processing section (Va) .

8. Redundant automation system according to one of Claims 5 to 7, **characterized in that** the master (M) is designed to also transmit process input values (Ew1, Ew2) to the slave (S) at the time (t2, t3, t6; t5) at which the releases (F1, F2, F4; F3) are transmitted.

9. Slave which is adapted for a redundant automation system having a master (M) and the slave (S) according to one of Claims 5 to 8.

10. Master which is adapted for a redundant automation system having a slave (S) and the master (M) according to one of claims 5 to 8.

## Revendications

1. Procédé pour faire fonctionner un système d'automatisation redondant pourvu d'un premier et d'un deuxième sous-systèmes, lesquels traitent, pendant la commande d'un processus technique, chacun un programme (P1, P2) de commande, l'un de ces sous-systèmes travaillant comme maître (M) et l'autre sous-système comme esclave (S) et dans lequel, dans le cas où le maître (M) est défaillant, l'esclave (S) prend en charge la fonction du maître, **caractérisé en ce que**
- on traite des parties (Va) de traitement du programme (P1) de commande à traiter au moyen du maître (M),
- après l'apparition d'un événement (E) à un instant (t5) de l'apparition d'un point (P1 C) d'interruption suivant l'apparition de cet événement (E), il est transmis à l'esclave (S) par le maître (M) une libération (F3) et le maître (M) continue à traiter son programme (P1) de commande à traiter, et
- la libération (F3) indique à l'esclave (S) la partie (Va) de traitement de l'esclave (S) jusqu'à laquelle il doit traiter son programme (P2) de commande, dans lequel, en raison de la libération (F3), les parties (Va) de traitement du programme (P2) de commande à traiter au moyen de l'esclave (S) sont traitées, parties qui correspondent, d'une libération (F2) précédente à la libération (F3) aux parties (Va) de traitement déjà traitées du programme (P1) de commande à traiter au moyen du maître (M).

2. Procédé suivant la revendication 1, **caractérisé en ce que** il est confirmé au maître (M) par l'esclave (S), après le traitement de chaque partie (Va) de traitement, la libération (F1, F2, F3, F4) respective.

3. Procédé suivant la revendication 1 ou 2, **caractérisé en ce qu'**on prévoit des points (P1_6, P1_A, P1_C, P1_12) d'interruption au début et à la fin de chaque partie (Va) de traitement.

4. Procédé suivant l'une des revendications 1 à 3, **caractérisé en ce qu'**à l'instant (t2, t3, t6; t5) de la transmission des libérations (F1, F2, F4; F3) il est transmis à l'esclave (S) au moyen du maître (M) également des valeurs (Ew1, Ew2) d'entrée de processus.

5. Système d'automatisation redondant pourvu d'un premier et d'un deuxième sous-systèmes qui, pendant la commande d'un processus technique traitent, chacun, un programme (P1, P2) de commande, l'un de ces sous-systèmes travaillant en maître (M) et l'autre sous-système en esclave (S) et dans lequel, dans le cas où le maître (M) est défaillant, l'esclave (S) prend en charge la fonction du maître (M), **caractérisé en ce que**
- le maître (M) est constitué
- pour traiter des parties (Va) de traitement du programme (P1) de commande à traiter au moyen du maître (M),
- pour, après l'apparition d'un événement (E) à un instant (t5) de l'apparition d' un point (P1 C) d'interruption suivant l'apparition de cet évènement (E), transmettre à l'esclave (S) une libération (F3) et continuer à traiter son programme (P1) de commande, la libération (F3) indiquant à l'esclave (S), la partie (Va) de traitement jusqu'à laquelle l'esclave (S) doit traiter son programme (P2) de commande et
- pour traiter d'autres parties (Va) de traitement du programme (P1) de commande à traiter au moyen du maître (M) et
- l'esclave (S) est constitué
- pour ne traiter des parties (Va) de traitement du programme (P2) de commande à traiter au moyen de l'esclave (S) que si la libération (F3) est transmise par le maître (M) à l'esclave (S), et
- pour, sur la base de la libération (F3), traiter des parties (Va) de traitement du programme (P2) de commande à traiter au moyen de l'esclave (S), qui correspondent, d'une libération (F2) précédente à la libération (F3), aux parties (Va) de traitement déjà traitées du programme (P1) de commande à traiter par le maître (M).

6. Système d'automatisation redondant suivant la revendication 5, **caractérisé en ce que** l'esclave (S) est constitué pour, après le traitement de chaque partie (Va) de traitement, confirmer au maître (M) la libération (F1, F2, F3, F4) respective.

7. Système d'automatisation redondant suivant la revendication 5 ou 6, caractérisé en que le système d'automatisation est constitué pour prévoir, dans les programmes (P, P2) de commande à traiter au moyen du maître (M) et au moyen de l'esclave (S) respectivement au début et à la fin de la partie (Va) de traitement respective, des points (P1_6, P1_A, P1_C, P1_12) d'interruption.

8. Système d'automatisation redondant suivant l'une des revendications 5 à 7, **caractérisé en ce que** le maître (M) est constitué pour, à l'instant (t2, t3, t6; t5) de la transmission des libérations (F1, F2, F4; F3), transmettre à l'esclave (S) également des valeurs (Ew1, Ew2) d'entrée de processus.

9. Esclave qui est adapté à un système d' automatisation redondant ayant un maître (M) et l'esclave (S) suivant l'une des revendications 5 à 8.

10. Maître qui est adapté à un système d'automatisation redondant ayant un esclave (S) et le maître (M) suivant l'une des revendications 5 à 8.
